(19) Europäisches Patentamt
European Patent Office
Office européen des brevets

(11) **EP 1 854 097 B1**

(12) **FASCICULE DE BREVET EUROPEEN**

(45) Date de publication et mention de la délivrance du brevet:
**15.10.2008 Bulletin 2008/42**

(51) Int Cl.:
***G11B 7/00*** (2006.01)

(21) Numéro de dépôt: **06709378.1**

(86) Numéro de dépôt international:
**PCT/FR2006/000429**

(22) Date de dépôt: **24.02.2006**

(87) Numéro de publication internationale:
**WO 2006/092483 (08.09.2006 Gazette 2006/36)**

(54) **SUPPORT D ENREGISTREMENT OPTIQUE DE DONNEES COMPORTANT UNE COUCHE SEMI-REFLECHISSANTE EN ALLIAGE A BASE D ETAIN ET DE TELLURE**

OPTISCHES DATENSPEICHERMEDIUM MIT EINER HALBREFLEKTIERENDEN SCHICHT AUF DER BASIS EINER LEGIERUNG AUS ZINN UND TELLUR

OPTICAL DATA STORAGE MEDIUM COMPRISING A SEMI-REFLECTIVE TIN- AND TELLURIUM-BASED ALLOY LAYER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **03.03.2005 FR 0502149**

(43) Date de publication de la demande:
**14.11.2007 Bulletin 2007/46**

(73) Titulaires:
• **COMMISSARIAT A L'ENERGIE ATOMIQUE**
**75015 Paris (FR)**
• **MPO International**
**53700 Averton (FR)**

(72) Inventeurs:
• **POUPINET, Ludovic**
**F-38360 Sassenage (FR)**
• **HYOT, Bérangère**
**F-38320 Eybens (FR)**

• **DESRE, Pierre**
**F-38240 Meylan (FR)**

(74) Mandataire: **Jouvray, Marie-Andrée et al**
**Cabinet Hecké,**
**World Trade Center - Europole,**
**5, place Robert Schuman,**
**B.P. 1537**
**38025 Grenoble Cedex 1 (FR)**

(56) Documents cités:
**EP-A- 1 359 575** **WO-A-20/04006228**

• **DATABASE WPI Section Ch, Week 199121 Derwent Publications Ltd., London, GB; Class G06, AN 1991-152692 XP002382908 & JP 03 088144 A (ASAHI CHEM IND CO LTD) 12 avril 1991 (1991-04-12)**
• **PATENT ABSTRACTS OF JAPAN vol. 1995, no. 04, 31 mai 1995 (1995-05-31) & JP 07 021585 A (SANYO ELECTRIC CO LTD), 24 janvier 1995 (1995-01-24)**

EP 1 854 097 B1

# Description

## Domaine technique de l'invention

L'invention concerne un support d'enregistrement optique de données comportant :

- une couche active en matériau inorganique, apte à subir des déformations locales pendant des opérations d'écriture et présentant une face avant destinée à recevoir un rayonnement optique pendant au moins des opérations de lecture
- et une couche semi-réfléchissante disposée sur la face avant de la couche active.

## État de la technique

L'enregistrement optique, par exemple sur des supports de type CD-R (disque compact enregistrable également connu sous le nom anglo-saxon «Compact Disc Recordable») et de type DVD-R (disque numérique polyvalent enregistrable également connu sous le nom anglo-saxon "Digital Versatile Disc Recordable"), est, le plus souvent, réalisé grâce à une couche en matériau à colorant déposée sur un substrat en matière plastique et recouverte par une couche métallique réflectrice. Cependant, les technologies d'enregistrement optique irréversible dans des matériaux à colorant présentent parfois des coûts élevés, notamment par rapport au prix des colorants et au coût de la main d'oeuvre pour les étapes de manipulation des colorants.

Dans les années 80, de nombreuses recherches ont porté sur la formation de marques dans des matériaux inorganiques par ablation laser, la présence de la marque se traduisant alors par une baisse locale de la réflexion d'un faisceau laser à la surface du disque. Les matériaux inorganiques étudiés à cette époque sont, par exemple, le tellure et les alliages comportant de l'arsenic, de l'antimoine, du sélénium et du soufre. Cependant, dans la plupart des études et notamment dans l'article « Chalcogenide thin films for laser-beam recordings by thermal creation of holes » de M. Terao et Al. (J. Appl. Phys. 50 (11), November 1979), les puissances utilisées étaient comprises entre 40 mW et 300 mW et les dimensions des marques étaient de l'ordre de 10 $\mu$m. Or, ces puissances et ces dimensions de marques ne correspondent plus aux spécifications d'écriture actuelles. En effet, les puissances d'écriture utilisées pour enregistrer des données sur un DVD-R doivent être de l'ordre de 10 mW et le diamètre d'une marque doit être de l'ordre de 400 nm.

Par ailleurs, avec de tels matériaux inorganiques, il est souvent nécessaire de déposer une couche protectrice, par exemple en polymère, sur le support d'enregistrement. Cependant, la présence d'une couche protectrice provoque généralement une dégradation de la qualité des signaux et une augmentation de la puissance d'écriture. Ainsi, beaucoup de matériaux ont été étudiés, mais peu permettent une écriture de bonne qualité. De plus, ils ne permettent pas d'atteindre les densités de stockage requises pour le format DVD-R. C'est pourquoi, les colorants, malgré leur coût de fabrication élevé, se sont imposés pour ce standard.

Actuellement, certains proposent de réaliser l'enregistrement optique des données, dans un support comportant une couche active en matériau inorganique, au moyen d'une diode laser bleue. L'étroitesse du faisceau laser focalisé permet, en effet, d'obtenir une densité de puissance plus élevée que dans les générations précédentes de disques optiques (CD-R et DVD-R).

Ceci permet de dépasser la limite usuelle des matériaux inorganiques, c'est-à-dire une relative insensibilité comparativement aux disques organiques. Une autre technique d'écriture exploitant la déformation des couches sous forme de bulles au lieu de trous permet également d'utiliser des puissances plus faibles.

Pour obtenir un support d'enregistrement comportant une couche active inorganique, permettant d'atteindre une résolution des marques et une densité de stockage correspondant aux spécifications du format DVD, il a été proposé, dans la demande de brevet WO-A-2004/053858, d'utiliser une couche active en alliage de tellure et de zinc. La couche active comporte une face avant destinée à recevoir un rayonnement optique, tel qu'un laser permettant un mécanisme d'écriture par déformation mécanique, par exemple sous forme de trous ou de bulles. Une couche semi-réfléchissante métallique est, éventuellement disposée sur la face avant de la couche active.

La demande de brevet WO-A-01/93256 précise l'avantage apporté par une couche semi-réfléchissante lorsque celle-ci est disposée sur la face avant d'une couche active en matériau inorganique, apte à se déformer localement pendant des opérations d'écriture. La couche semi-réfléchissante est formée par un métal choisi parmi le groupe comprenant l'aluminium, l'argent, le cuivre, l'or, le zinc, le titane et leurs alliages. Sa présence sur la face avant de la couche active permet d'accroître la valeur du coefficient de réflexion du support d'enregistrement, sans augmenter excessivement le seuil d'écriture. En effet, la couche active, lorsqu'elle n'est pas déformée, présente, généralement, un certain coefficient de réflexion mais celui-ci n'est pas suffisant pour obtenir un écart important entre ledit coefficient de réflexion et le coefficient de réflexion des zones déformées de la couche active, après une opération d'écriture. En effet, l'enregistrement de données par déformation locale de la couche active et éventuellement de la couche semi-réfléchissante a pour effet d'abaisser localement le coefficient de réflexion de l'empilement formé par la couche active et la couche semi-réfléchissante.

Cependant, les métaux ou les alliages utilisés pour former la couche semi-réfléchissante, bien que bons conducteurs thermiques, ne peuvent pas être utilisés en couches épaisses sans induire une baisse de sensibilité et, lorsqu'ils sont utilisés en couches fines, ils perdent, généralement, leurs propriétés métalliques et/ou ils se dégradent plus facilement, notamment par oxydation ou par sulfuration.

De plus, les matériaux inorganiques utilisés jusqu'à présent, dans le cadre d'écriture par formation de trous ou de bulles ont une réflexion relativement faible, souvent inférieure à 40%. Ceci provient notamment du fait de leur configuration électronique d'une part et de la structure amorphe qu'ils présentent après leur dépôt. Les mêmes matériaux, une fois cristallisés, présentent une réflexion plus importante, mais ils nécessitent une étape de transition de l'état amorphe à l'état cristallin, ce qui requiert l'utilisation d'un initialiseur. Or, l'utilisation d'un initialiseur, courante dans les disques ré-enregistrables, reste trop coûteuse pour les supports d'enregistrement irréversibles.

### Objet de l'invention

L'invention a pour but de remédier aux inconvénients de l'art antérieur et, plus particulièrement, de proposer un support d'enregistrement optique présentant une réflexion initiale d'un rayonnement optique de lecture et une absorption partielle d'un rayonnement optique d'écriture, correspondant aux spécifications des normes internationales, notamment dans le cas d'un support DVD.

Selon l'invention, ce but est atteint par les revendications annexées.

Plus particulièrement, ce but est atteint par le fait que la couche semi-réfléchissante est une couche mince en alliage à base d'étain et de tellure.

L'alliage peut être un alliage d'étain et de tellure ou bien il peut être un alliage d'étain, de tellure et d'un métal choisi parmi le zinc et l'indium.

Selon un développement de l'invention, le matériau inorganique de la couche active est un alliage de tellure et de zinc.

Selon un mode particulier de réalisation, le matériau inorganique de la couche active est un alliage de tellure et de zinc, la couche active et la couche semi-réfléchissante formant, de préférence, un empilement ayant une épaisseur inférieure ou égale à 80nm. Plus particulièrement, la couche semi-réfléchissante et la couche active ont chacune une épaisseur de l'ordre de 20nm.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 représente un mode particulier de réalisation d'un support d'enregistrement optique selon l'invention.
La figure 2 représente les variations de l'indice de réfraction (n) et du coefficient d'absorption (k) d'un alliage Sn-Te en fonction de l'énergie de photon (eV).
Les figures 3 à 5 représentent, les iso-valeurs de la réflexion et de l'absorption pour différentes valeurs d'indice de réfraction (n) et de coefficient d'absorption (k) pour une couche mince respectivement de 20, 30 et 40nm.
La figure 6 illustre schématiquement, sur un même graphique, les différentes zones 1 représentées aux figures 3 à 5.
La figure 7 représente une variante de réalisation d'un support d'enregistrement optique selon la figure 1.

### Description de modes particuliers de réalisation

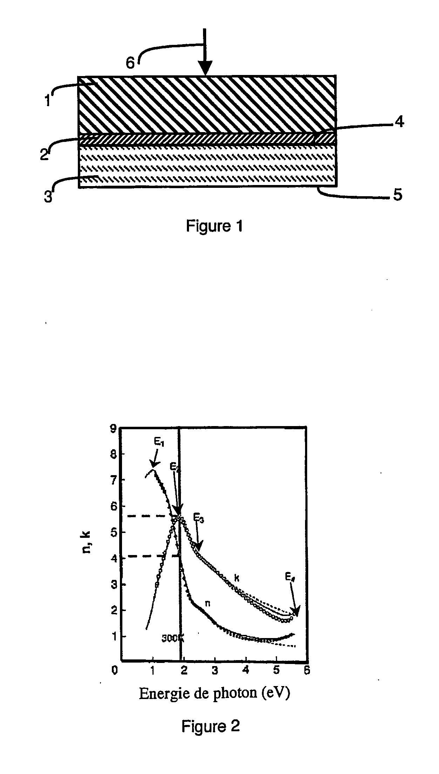

Comme représenté à la figure 1, un support d'enregistrement optique de données, de préférence irréversible, comporte un substrat 1, par exemple en polycarbonate, sur lequel sont disposées successivement une couche semi-réfléchissante 2 et une couche active 3.

L'empilement formé par la couche active 3 et la couche semi-réfléchissante 2 a, de préférence, une épaisseur inférieure ou égale à 80 nanomètres et préférentiellement inférieure ou égale à 50nm. Plus particulièrement, selon un mode préféré, la couche semi-réfléchissante 2 et la couche active 3 ont chacune une épaisseur de l'ordre de 20nm.

La couche active 3 est en matériau inorganique. Elle est, de préférence, en alliage de zinc et de tellure (Zn-Te). Elle présente une face avant 4 en contact avec la couche semi-réfléchissante 2 et une face arrière 5 libre. Elle est apte à subir des déformations locales pendant des opérations d'écriture et sa face avant 4 est destinée à recevoir un rayonnement optique 6 pendant au moins des opérations de lecture. Les déformations locales subies par la couche active sont, de préférence, des déformations sous forme de bulles, provoquées par l'action d'un rayonnement optique d'écriture reçu par la face avant 4 de la couche active 3. La couche semi-réfléchissante 2 peut également être déformée sous l'action de la déformation de la couche active. Le rayonnement optique d'écriture est, par exemple, un faisceau laser focalisé.

La couche semi-réfléchissante 2 est composée d'une alliage à base d'étain et de tellure. Elle est, par exemple, en tellurure d'étain (Sn-Te) également appelé alliage ou composé d'étain et de tellure. De préférence, dans l'alliage Sn-Te, la proportion en pourcentage atomique d'étain est comprise entre 40% et 60%, et, plus particulièrement entre 45% et 55%. La proportion en pourcentage atomique de tellure, dans ledit alliage, étant complémentaire à celle de l'étain, elle est, de préférence, comprise entre 60% et 40% et plus particulièrement entre 55% et 45%. Ainsi, une composition privilégiée de l'alliage Sn-Te, en pourcentages atomiques, est de 50% d'étain et de 50% de tellure.

La présence d'une couche semi-réfléchissante en alliage à base d'étain et de tellure permet d'améliorer le coefficient de réflexion du support d'enregistrement. En effet, lorsque le support d'enregistrement ne comporte qu'une couche active en matériau inorganique, par exemple en ZnTe, la réflexion du support d'enregistrement est de l'ordre de 20% à 30%. Or, les normes internationales exigent que les supports de type DVD-R aient une réflexion initiale d'au moins 45%. Cette réflexion fait intervenir la géométrie du substrat, qui peut être responsable de pertes par diffraction, et les propriétés optiques de matériaux déposés sur ce substrat. De plus, l'écriture des données étant liée à l'absorption partielle d'un rayonnement optique par les couches déposées sur le substrat et notamment par la couche active, l'absorption du support doit être au moins supérieure à 30%.

Pour être efficace, la couche semi-réfléchissante devant être disposée sur la face avant de la couche active doit, en pratique, avoir un indice de réfraction n et un coefficient d'absorption k respectant les spécifications suivantes :

$$(n-4)^2 + k^2 > 12,25$$

$$(n-8)^2 + (k+1)^2 > 12,25$$

$$(n-7)^2 + k^2 < 42,25$$

- n et k doivent être positifs
- n doit être inférieur à 8.

La figure 2 représente la variation théorique de l'indice de réfraction n et du coefficient d'absorption k de l'alliage Sn-Te, sous forme cristallisée, en fonction de l'énergie de photon. On constate qu'à une valeur d'énergie de 2 eV, valeur d'énergie correspondant à peu près à la longueur d'onde utilisée de manière connue pour des opérations d'écriture et de lecture dans un support de type DVD-R, l'alliage Sn-Te présente un indice de réfraction très élevé, de l'ordre de 4, et un coefficient d'absorption maximal, de l'ordre de 5,5. L'indice de réfraction n et le coefficient d'absorption k de l'alliage Sn-Te vérifie donc les spécifications mentionnées ci-dessus. Ledit alliage peut donc être utilisé pour former une couche semi-réfléchissante disposée sur la face avant d'une couche active d'un support d'enregistrement.

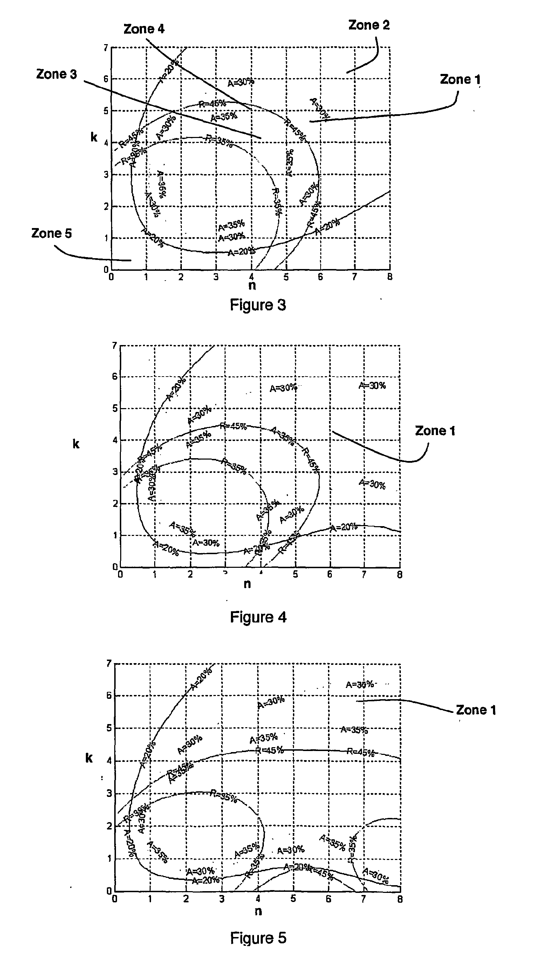

Par ailleurs, les figures 3 à 5 représentent les iso-valeurs de la réflexion et de l'absorption pour différentes valeurs d'indice de réfraction n et de coefficient d'absorption k d'une couche mince, ayant respectivement une épaisseur de 20, 30 et 40nm. Sur les figures 3 à 5, les différentes zones 1 représentées correspondent à des zones d'indices de réfraction n et de coefficients d'absorption k dans lesquelles l'absorption est supérieure à 30% et la réflexion est d'au moins 45%. Sur la figure 3, des zones 2 à 5 sont également représentées à titre d'indication. Dans la zone 2, la réflexion est d'au moins 45% mais l'absorption est comprise entre 20 et 30% tandis que, dans la zone 3, la réflexion est comprise entre 35% et 45% mais l'absorption est supérieure à 35%. Dans la zone 4, la réflexion est comprise entre 35 et 45% et l'absorption est comprise entre 20 et 35% tandis que, dans la zone 5, la réflexion et l'absorption sont trop faibles. La zone 1 représente donc la zone idéale dans laquelle doit se placer un support d'enregistrement de type DVD pour répondre aux exigences des normes internationales.

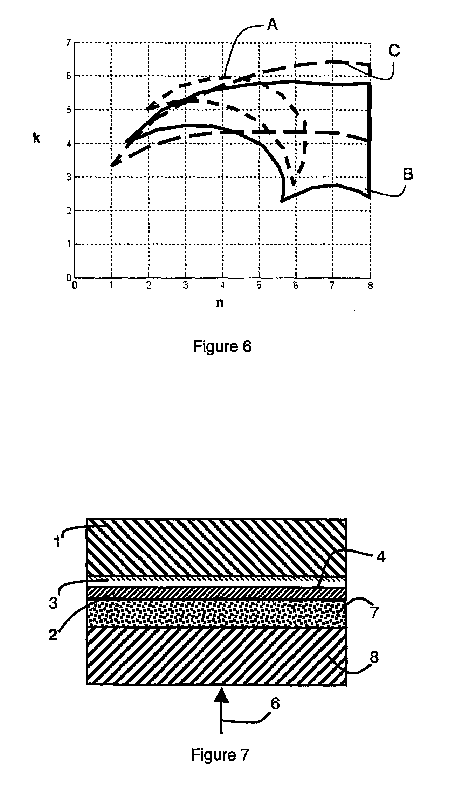

Or, les figures 3 à 5 montrent que les courbes d'iso-valeurs de réflexion et d'absorption varient selon l'épaisseur de la couche mince. Ainsi, la figure 6 représente, sur un même graphique, les différentes zones 1 représentées aux figures 3 à 5, respectivement pour une couche d'une épaisseur de 20, de 30 et de 40nm. La courbe A représente, ainsi, la zone 1 selon la figure 3 tandis que les courbes B et C représentent respectivement les zones 1 selon les figures 4 et 5.

On constate alors que, pour une valeur d'énergie de 2 eV, l'indice de réfraction n et le coefficient d'absorption k de l'alliage Sn-Te sont toujours situés dans une zone 1, quelle que soit l'épaisseur de la couche mince en alliage Sn-Te. Ainsi, contrairement aux matériaux inorganiques usuellement utilisés dans les supports d'enregistrement, les propriétés optiques de l'alliage Sn-Te permettent de répondre, en termes de réflexion et d'absorption, aux spécifications des normes internationales pour les DVD-R, quelle que soit l'épaisseur de ladite couche mince.

Par ailleurs, pour trouver un matériau se situant dans les zones 1 représentées aux figures 3 à 5, il est, généralement, habituel de chercher des matériaux présentant des propriétés optiques anormales, à proximité des bandes d'absorption et une des voix possibles est de choisir un matériau présentant un gap proche de la longueur d'onde de travail, c'est-à-dire une longueur d'onde correspondant à 2eV. Or, on constate, à la figure 2, que le coefficient d'absorption k de l'alliage Sn-Te progresse relativement doucement au-dessus de l'énergie de gap et que l'intérêt du matériau Sn-Te réside dans un point critique E2, proche de la longueur d'onde de travail, ce qui se traduit par un gap très petit.

Ainsi, une couche semi-réfléchissante en alliage d'étain et de tellure permet d'obtenir un support d'enregistrement présentant une réflexion initiale d'un rayonnement optique de lecture et une absorption partielle d'un rayonnement optique d'écriture, correspondant aux spécifications des normes internationales, notamment dans le cas d'un support DVD. De plus, elle ne présente pas les inconvénients des fines couches métalliques semi-réfléchissantes décrites dans le document WO-A-01/93256.

En effet, dans le document WO-A-01/93256, l'épaisseur de la couche semi-réfléchissante métallique, par exemple en aluminium, en or, en argent, en cuivre, en zinc, en titane, en nickel ou en un de leurs alliages, est ajustée au mieux pour augmenter la réflexion du support d'enregistrement sans augmenter excessivement le seuil d'écriture. Ainsi, son épaisseur est de l'ordre de 4nm à 10nm de manière à limiter sa conductivité thermique. En effet, une conductivité thermique trop forte induirait une baisse de la sensibilité du support d'enregistrement.

Contrairement au document WO-A-01/93256, l'utilisation d'un alliage à base d'étain et de tellure et plus particulièrement d'un alliage Sn-Te pour former la couche semi-réfléchissante 2 permet, notamment, d'augmenter sensiblement l'épaisseur de la couche semi-réfléchissante 2, plus particulièrement jusqu'à une épaisseur de l'ordre de 20nm. Ceci permet d'améliorer la réflexion du support d'enregistrement. Toutefois, la couche semi-réfléchissante 2 conserve une conductivité thermique modérée, ce qui permet d'obtenir une sensibilité du support d'enregistrement acceptable.

Par ailleurs, l'alliage à base d'étain et de tellure présente également l'avantage d'avoir une température de cristallisation inférieure à 0°C. Ainsi, lors d'une opération de dépôt, la couche mince en alliage à base d'étain et de tellure est déjà sous forme cristalline, ce qui permet également d'obtenir une réflexion élevée. De plus, l'alliage à base d'étain et de tellure étant très stable, il ne subit pas de dégradations chimiques. Enfin, contrairement aux matériaux utilisés dans l'art antérieur, l'alliage à base d'étain et de tellure favorise des déformations locales sous forme de bulles pendant les opérations d'écriture. En effet, le comportement des couches semi-réfléchissantes métalliques utilisées dans l'art antérieur est, mécaniquement, plus favorable à la formation de trous qu'à celles de bulles. Or, l'enregistrement par formation de bulles est privilégiée car elle permet d'avoir des densités de stockage de données plus importantes que l'enregistrement obtenu par formation de trous.

Enfin, certains métaux utilisés pour former les fines couches métalliques semi-réfléchissantes décrites dans le document WO-A-01/93256 présentent en général l'inconvénient d'être sensibles à l'oxydation et/ou à la sulfuration. Or, une couche semi-réfléchissante en alliage à base d'étain et de tellure présente l'avantage d'être stable.

L'invention n'est pas limitée aux modes de réalisation décrits ci-dessus. Ainsi, les couches minces du support d'enregistrement peuvent être agencées au sein du support, dans un ordre différent pour permettre au rayonnement optique 6 d'atteindre la couche active 3 du côté opposé au substrat 1. Ainsi, à la figure 7, le substrat 1 en polycarbonate est successivement recouvert par la couche active 3, la couche semi-réfléchissante 2, une couche de colle 7 et un support de protection 8, par exemple en polycarbonate. Les faces avant 4 et arrière 5 de la couche active 3 sont alors respectivement en contact avec la couche semi-réfléchissante 2 et le substrat 1, de sorte que le rayonnement optique 6 provenant de la face libre du support de protection 8 atteint toujours la couche active par sa face avant 4. La couche de colle 7 est, de préférence, une couche de colle capable de se déformer. Elle accompagne, ainsi, la déformation des couches, respectivement active 3 et semi-réfléchissante 2, sous l'action d'un rayonnement optique d'écriture 6 provenant de la face libre du support de protection 8.

A titre d'exemple, dans le mode particulier de réalisation représenté à la figure 7, la couche active 3 est en alliage de zinc et de tellure, avec 65% atomiques de zinc et 35% atomiques de tellure tandis que la couche semi-réfléchissante 2 est en alliage d'étain et de tellure. Les couches active 3 et semi-réfléchissante 2 ont, par exemple, chacune une épaisseur de 20nm tandis que le substrat 1 a une épaisseur de 0,6mm et que l'épaisseur de la couche de colle 7 est de l'ordre de quelques dizaines de micromètres.

Le rayonnement optique d'écriture, par exemple un faisceau laser focalisé reçu par la face avant de la couche active, pour former des déformations locales dans la couche active peut également être remplacé par tout autre type de moyens tels que des moyens d'échauffement. A titre d'exemple, les déformations locales peuvent être provoquées par un échauffement provoqué par des micro-pointes ou par effet Joule.

L'alliage binaire d'étain et de tellure peut être avantageusement remplacé par un alliage ternaire formé d'étain, de tellure et d'un métal choisi parmi le zinc et l'indium. L'alliage d'étain, de tellure et de zinc et l'alliage d'étain, de tellure et d'indium sont, respectivement, notés $(SnTe)_xZn_{1-x}$ et $(SnTe)_xIn_{1-x}$. La valeur du paramètre $x$ est, de préférence, supérieure ou égale à 90%. Dans ce cas, la proportion atomique du métal choisi parmi le zinc et l'indium, dans l'alliage ternaire est inférieure ou égale à 10%.

## Revendications

1. Support d'enregistrement optique de données comportant :

   - une couche active (3) en matériau inorganique, apte à subir des déformations locales pendant des opérations d'écriture et présentant une face avant (4) destinée à recevoir un rayonnement optique (6) pendant au moins des opérations de lecture
   - et une couche semi-réfléchissante (2) disposée sur la face avant de la couche active (3),

   support **caractérisé en ce que** la couche semi-réfléchissante (2) est une couche mince en alliage à base d'étain et de tellure.

2. Support selon la revendication 1, **caractérisé en ce que** l'alliage est un alliage d'étain et de tellure.

**3.** Support selon la revendication 2, **caractérisé en ce que** la proportion en pourcentage atomique d'étain, dans l'alliage d'étain et de tellure, est comprise entre 40% et 60%.

**4.** Support selon la revendication 3, **caractérisé en ce que** la proportion en pourcentage atomique d'étain, dans l'alliage d'étain et de tellure, est comprise entre 45% et 55%.

**5.** Support selon la revendication 1, **caractérisé en ce que** l'alliage est un alliage d'étain, de tellure et d'un métal choisi parmi le zinc et l'indium.

**6.** Support selon la revendication 5, **caractérisé en ce que** la proportion en pourcentage atomique dudit métal choisi parmi le zinc et l'indium, dans ledit alliage, est inférieure ou égale à 10%.

**7.** Support selon l'une quelconque des revendications 1 à 6, **caractérisé en ce que** le matériau inorganique de la couche active (3) est un alliage de tellure et de zinc.

**8.** Support selon l'une quelconque des revendications 1 à 7, **caractérisé en ce que** la couche active (3) et la couche semi-réfléchissante (2) forme un empilement ayant une épaisseur inférieure ou égale à 80nm.

**9.** Support selon la revendication 8, **caractérisé en ce que** l'empilement a une épaisseur inférieure ou égale à 50nm.

**10.** Support selon l'une des revendications 8 et 9, **caractérisé en ce que** la couche semi-réfléchissante (2) et la couche active (3) ont chacune une épaisseur de l'ordre de 20nm.

**11.** Support selon l'une quelconque des revendications 1 à 10, **caractérisé en ce que** la couche active (3) est apte à subir des déformations locales provoquées par des moyens d'échauffement.

**12.** Support selon l'une quelconque des revendications 1 à 11, **caractérisé en ce que** la couche active (3) est apte à subir des déformations locales provoquées par l'action d'un rayonnement optique d'écriture reçu par la face avant (4) de la couche active (3).

**Claims**

**1.** Data optical recording medium comprising:

- an active layer (3) of inorganic material, that is able to undergo local deformations during write operations and presenting a front face (4) designed to receive an optical radiation (6) during at least read operations,
- and a semi-reflective layer (2) disposed on the front face of the active layer (3),

medium **characterized in that** the semi-reflective (2) layer is a thin layer of tin and tellurium based alloy.

**2.** Medium according to claim 1, **characterized in that** the alloy is tin and tellurium alloy.

**3.** Medium according to claim 2, **characterized in that** the proportion in atomic percentage of tin in the tin and tellurium alloy is comprised between 40% and 60%.

**4.** Medium according to claim 3, **characterized in that** the proportion in atomic percentage of tin in the tin and tellurium alloy is comprised between 45% and 55%.

**5.** Medium according to claim 1, **characterized in that** the alloy is an alloy of tin, tellurium and a metal selected from zinc and indium.

**6.** Medium according to claim 5, **characterized in that** the proportion in atomic percentage of said metal selected from zinc and indium in said alloy is less than or equal to 10%.

**7.** Medium according to any one of claims 1 to 6, **characterized in that** the inorganic material of the active layer (3) is a tellurium and zinc alloy.

**8.** Medium according to any one of claims 1 to 7, **characterized in that** the active layer (3) and the semi-reflective layer (2) form a stack having a thickness less than or equal to 80nm.

**9.** Medium according to claim 8, **characterized in that** the stack has a thickness less than or equal to 50nm.

**10.** Medium according to one of claims 8 and 9, **characterized in that** the semi-reflective layer (2) and the active layer (3) each have a thickness of about 20nm.

**11.** Medium according to any one of claims 1 to 10, **characterized in that** the active layer (3) is able to undergo local deformations caused by heating means.

**12.** Medium according to any one of claims 1 to 11, **characterized in that** the active layer (3) is able to undergo local deformations caused by the action of a write optical radiation received by the front face (4) of the active layer (3).

**Patentansprüche**

1. Optischer Datenaufzeichnungsträger, der umfasst:

   - eine aktive Schicht (3) aus anorganischem Material, das geeignet ist, sich während Schreibvorgängen lokal zu verformen und eine Vorderseite (4) hat, die zumindest während Lesevorgängen eine optische Strahlung (6) aufnehmen soll,
   - und eine halbreflektierende Schicht (2), die auf der Vorderseite der aktiven Schicht (3) angeordnet ist,

   Träger, der **dadurch gekennzeichnet ist, dass** die halbreflektierende Schicht (2) eine Dünnschicht aus einer Legierung auf Basis von Zinn und Tellur ist.

2. Träger nach Anspruch 1, **dadurch gekennzeichnet, dass** die Legierung eine Zink-Tellur-Legierung ist.

3. Träger nach Anspruch 2, **dadurch gekennzeichnet, dass** der Atomprozentanteil des Zinns in der Zinn-Tellur-Legierung 40 bis 60 % beträgt.

4. Träger nach Anspruch 3, **dadurch gekennzeichnet, dass** der Atomprozentanteil des Zinns in der Zinn-Tellur-Legierung 45 bis 55 % beträgt.

5. Träger nach Anspruch 1, **dadurch gekennzeichnet, dass** die Legierung eine Legierung aus Zinn, Tellur und einem aus Zink und Indium ausgewählten Metall ist.

6. Träger nach Anspruch 5, **dadurch gekennzeichnet, dass** der Atomprozentanteil des aus Zink und Indium ausgewählten Metalls in der Legierung unter oder gleich 10 % ist.

7. Träger nach einem der Ansprüche 1 bis 6, **dadurch gekennzeichnet, dass** das anorganische Material der aktiven Schicht (3) eine Tellur-Zink-Legierung ist.

8. Träger nach einem der Ansprüche 1 bis 7, **dadurch gekennzeichnet, dass** die aktive Schicht (3) und die halbreflektierende Schicht (2) eine Aufschichtung mit einer Dicke unter oder gleich 80 nm bilden.

9. Träger nach Anspruch 8, **dadurch gekennzeichnet, dass** die Aufschichtung eine Dicke von unter oder gleich 50 nm hat.

10. Träger nach einem der Ansprüche 8 und 9, **dadurch gekennzeichnet, dass** die halbreflektierende Schicht (2) und die aktive Schicht (3) jeweils eine Dicke von etwa 20 nm haben.

11. Träger nach einem der Ansprüche 1 bis 10, **dadurch gekennzeichnet, dass** die aktive Schicht (3) geeignet ist, sich mittels Erwärmungsmittel lokal zu verformen.

12. Träger nach einem der Ansprüche 1 bis 11, **dadurch gekennzeichnet, dass** die aktive Schicht (3) geeignet ist, sich durch die Wirkung einer optischen Schreibstrahlung, die die Vorderseite (4) der aktiven Schicht (3) empfängt, lokal zu verformen.

Figure 1

Energie de photon (eV)

Figure 2

Figure 3

Figure 4

Figure 5

Figure 6

Figure 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004053858 A

- WO 0193256 A

**Littérature non-brevet citée dans la description**

- **M. TERAO et al.** Chalcogenide thin films for laser-beam recordings by thermal creation of holes. *J. Appl. Phys.,* Novembre 1979, vol. 50 (11